# EUROPÄISCHE PATENTSCHRIFT

(11) **EP 2 308 908 B1**
(45) Veröffentlichungstag und Bekanntmachung des Hinweises auf die Patenterteilung: **25.06.2014**
(21) Anmeldenummer: 10011396.8
(22) Anmeldetag: 29.09.2010
(51) Int. Cl.: C08G 18/61, C08G 18/80, C08F 220/24, C09D 133/16, C08G 18/08, C08G 18/28, C08G 18/38, D06M 15/568, C08G 18/79, C08G 18/12, C08L 75/04, C08L 33/16

(54) **Wäßrige Dispersion einer hitzehärtenden Polyurethankomposition**
Aqueous dispersion of a heat hardened polyurethane composition
Dispersion aqueuse d'une composition de polyuréthane durcissant à la chaleur

(30) Priorität: 10.10.2009 DE 102009048945
(43) Veröffentlichungstag der Anmeldung: 13.04.2011
(73) Patentinhaber: Jansen, Bernhard, 51061 Köln (DE)
(72) Erfinder: Jansen, Bernhard, 51061 Köln (DE)
(74) Vertreter: Hüttermann, Aloys

(56) Entgegenhaltungen:
- EP-A2- 0 537 578
- DE-A1- 19 852 621
- DE-A1-102007 020 790
- US-A1- 2005 171 279
- DATABASE WPI Week 199954 Thomson Scientific, London, GB; AN 1999-629825 XP002615961, -& JP 11 279951 A (NIKKA KAGAKU KK) 12. Oktober 1999 (1999-10-12)

## Beschreibung

Die vorliegende Erfindung betrifft wässrige Dispersionen hitzehärtender Polyurethankompositionen auf der Basis blockierter Isocyanate, ein Verfahren zu deren Herstellung und deren Verwendung als Textilhilfsmittel.
Blockierte Isocyanate als solche oder im Gemisch mit anderen Hilfsmitteln werden seit langem in der Textilausrüstung benutzt. Da Deblockierung und Aushärtung stets bei erhöhter Temperatur stattfinden, handelt es sich um hitzehärtende Systeme, bei deren Anwendung gewissermaßen ein Netzwerk auf dem textilen Material gebildet wird.
Um als einkomponentige Produkte im Gemisch mit kationischen Textilhilfsmitteln lagerstabil herstellbar zu sein, müssen die hierzu vorgesehenen erfindungsgemäßen hitzehärtenden Polyurethankompositionen mit kationischen Hilfsmitteln kompatibel sein. Das gleiche gilt besonders, wenn unterschiedliche Hilfsmittel im Gemisch in den Handel gebracht werden sollen.

EP 622 389 beschreibt wässrige Kunstharzdispersionen als Bindmittel in Elektrotauchlackbädern, bei denen auch verkappte Isocyanate verwendet werden. Diese Isocyanate werden hinsichtlich Ausgangssubstanzen und Blockiermittel beschrieben. Es wird offengelegt, dass Präpolymere von Isocyanaten mit Polyglykolethern, Polyesterpolyolen, Polyetherpolyolen, Polycaprolactonpolyolen und/oder Polycaprolactampolyolen als Vorstufe zur Blockierung dienen können. Auch eine "Molekülvergrößerung" durch Reaktion des Isocyanates mit Tertiäraminogruppen aufweisenden Polyolen ist beschrieben. Für eine bessere Löslichkeit wird der Einsatz tertiäre Aminofunktionen aufweisender, aber als Kettenabbrecher wirkender monofunktioneller Alkohole wie beispielsweise Dimethylethanolamin empfohlen.

In US 2003/83 427 wird ein Nassfestmittel für Papier auf Basis eines wasserlöslichen, blockierten hydrophilen Isocyanatpräpolymers propagiert. Als Blockiermittel wird ein substituiertes Phenol beansprucht. Die kationischen Ladungen werden durch Reaktion von tertiäre Aminogruppen aufweisenden Alkoholen mit dem Isocyanat eingebracht, entweder durch Ansäuern der tertiären Amine oder durch deren Quaternierung.

EP 537 578 enthält die Beschreibung eines Hilfsmittels auf Basis wasserdispergierbarer blockierter Isocyanate sowie ein Verfahren zu deren Herstellung und ihre Verwendung in der Knitterfestausrüstung, Hochveredlung und zur Oleophob- und Hydrophobausrüstung. Hier sind Polyalkylenether und ionische (also auch kationische) Gruppen als wasserdispergierbar machende Strukturelemente gleichzeitig anwesend. Zum Aufbau der blockierten Isocyanate können auch Präpolymere von Isocyanaten mit C3 bis C10-Polyolen mit 3 bis 4 Hydroxylfunktionen aber auch die Reaktionsprodukte von Isocyanaten mit niedermolekularen Polyaminen, also Polyharnstoffe, verwendet werden.

Alle diese Patentanmeldungen des Standes der Technik beschreiben Systeme, die entweder durch permanent hydrophile Gruppen wie nichtionische Polyethylenglykolketten oder mittels quaternierter tertiärer Aminogruppen stark hydrophiliert sind und hierdurch sowie durch ihren hohen Anteil anderweitiger Strukturelemente keinerlei eigene Hydrophobie besitzen.
Häufig ist diese sozusagen "inhärente" Hydrophilie störend bei der Hydrophob- und Oleophobausrüstung von Textilien.

Es galt daher die Aufgabe der Erfindung, blockierte Isocyanate bereitzustellen, die von sich aus eine ausreichende Hydrophobwirkung zu erzeugen im Stande sind und die Verwendung permanenter Ladungen möglichst weitestgehend zu minimieren sowie möglichst wenig nichtionische hydrophilierende Strukturen, wie beispielsweise Ethoxylate, zu verwenden.
Die erfindungsgemäßen Produkte sollen für eine gemeinsame lagerstabile Formulierung mit kationischen Hilfsmitteln geeignet sein und sich als Fixiermittel für kationische Textilhilfsmittel eignen, insbesondere für die als Hydrophobier- und Oleophobiermittel wirkende Klasse der Fluorcarbone.
Darüber hinaus soll das auf dem textilen Material erzeugte Netzwerk nicht den natürlichen Griff desselben beeinträchtigen, wie es bei "Extendern" des Standes der Technik häufig der Fall ist, sondern diesen möglichst verbessern.

Überraschenderweise wurde nun gefunden, dass man im Sinne der oben formulierten Aufgabe technisch überlegene Produkte erhält, wenn man bei der Herstellung der erfindungsgemäßen wässrigen Dispersionen hitzehärtender Polyurethankompositionen carbinolfunktionelle Polydimethylpolysiloxane verwendet.

Gegenstand der Erfindung sind also wässrige Dispersionen hitzehärtender Polyurethankompositionen erhältlich durch:
a) Reaktion von:
   1) Polyisocyanaten der Formel (I)

      Q(NCO)ₚ (I)

      mit p größer als 1,5 ,
   2) Carbinolfunktionellen Polysiloxanen der Formel (II)

      H-X-R-[Si(Me₂)-O]ₙ-Si(Me₂) -R-X-H (II)

      mit R = (CH₂) mit x = 2 bis 20
      X = -O-(CHY-CHY-O)ₒ-
      mit Y = Methyl- oder Wasserstoff, mit der Einschränkung, dass pro CHY-CHY-Einheit entweder beide Y für H stehen oder nur ein Y von beiden Methyl- bedeuten soll, und o = 0 bis 20 ,
      und n = 4 bis 50
      sowie Me = Methyl,
   3) hydmphilierenden Komponenten der Struktur (III) und/oder (IV)

      H-O-(CHY-CHY-O)_{q}-H (III)

      R-O-(CHY-CHY-O)ₘ-H (IV)

      mit Y in der oben genannten Bedeutung
      und q = 20 bis 40
      sowie m = 25 bis 65
      und R = Alkyl mit einem bis sechs Kohlenstoffatomen
   4) gemischtfunktionellen Verbindungen, die gleichzeitig mindestens eine tertiäre Aminofuktion oder eine Säuregruppe und mindestens eine Funktion aus der folgenden Gruppe, gebildet aus : primärer Aminofunktion, sekundärer Aminofunktion, Hydroxylfunktion und Thiolfunktion aufweist.
   5) Blockiermitteln für Isocyanatgruppen,
      b1) Ansäuern des Reaktionsgemisches aus 1),2), 3), 4) und 5) für den Fall , dass die gemischtfunktionelle Verbindung 4) eine tertiäre Aminofunktion trägt und
      b2) Zugabe von Wasser sowie ggf. weiterer Hilfs- und Zusatzstoffe.

Als Polyisocyanate 1) der allgemeinen Formel (I)

Q(NCO)ₚ (I)

wobei Q und p die oben genannten Bedeutungen haben, kommen beispielsweise die drei folgenden Typen in Frage:
I) Aliphatische, cycloaliphatische , araliphatische und aromatische Polyisocyanate.
II) Aliphatische, cycloaliphatische, araliphatische und aromatische Polyisocyanate , die Isocyanurat- und/ oder Uretdion- und/oder Allophanat- und/oder Biuret- und/oder Oxadiazinstrukturen enthalten.
III) Isocyanatpräpolymere, die erhältlich sind durch Umsetzung von aliphatischen, cycloaliphatischen, araliphatischen und aromatischen Diisocyanaten und Polyestern und oder Polyethern und/oder mehrwertigen Alkoholen.

Als aliphatische, cycloaliphatische, araliphatische und aromatische Diisocyanate, die als Typ I) oder auch zur Herstellung der Typen II) und III) eingesetzt werden können, seien beispielhaft genannt: 1,4-Diisocyanatobutan, 1,6-Diisocyanatohexan, 1,5-Diisocyanato-2,2-dimethylpentan, 2,2,4-Trimethyl-1,6-diisocyanatohexan, 1,3- und 1,4- Diisocyanatocyclohexan, 1-Isocyanato-1-methyl-4-isocyanatomethylcyclohexan, 1-Isocyanato-3,3,5,trimethyl-5-isocyanatomethylcyclohexan und 4,4'-Diisocyanatodiphenylmethan, sowie die Isomeren, bzw. Isomerengemische des Toluylendiisocyanats sowie beliebige Gemische dieser hier genannten Isocyanate .

Die aliphatischen, cycloaliphatischen, araliphatischen und aromatischen Polyisocyanate des Typs II) mit Isocyanurat- und/oder Uretdion- und/oder Allophanat- und/oder Biuret- und/oder Oxadiazinstruktur können nach an sich bekannten Verfahren des Standes der Technik durch Modifizierung aus entsprechenden aliphatischen, cycloaliphatischen , araliphatischen und aromatischen Polyisocyanaten des Typs I) hergestellt werden.

Unter den Isocyanatpräpolymeren II) sind Umsetzungsprodukte von aliphatischen, cycloaliphatischen, araliphatischen und aromatischen Polyisocyanaten des Typs I) und an sich bekannten und nach Verfahren des Standes der Technik erhältlichen kurzkettigen Polyestern und/oder Polyethern und/oder mehrwertigen Alkoholen wie beispielsweise Glycerin, Trimethylolethan, Trimethylolpropan, Trimethylolhexan oder Pentaerythrit zu verstehen, die auch gegebenenfalls nicht umgesetzte, freie Polyisocyanate enthalten können.

Bei den bevorzugten, Uretdion- und/oder Isocyanurat- und/oder Allophanat- und/oder Biuret und/oder Oxadiazinstrukturen aufweisenden Polyisocyanaten des Typs II) mit einem mittleren NCO-Gehalt von 19 bis 24 Gew.-% handelt es sich im wesentlichen um die trimeren Reaktionsprodukte von 1,6-Diisocyanatohexan oder 1-Isocyanato-3,3,5,trimethyl-5-isocyanatomethylcyclohexan sowie den entsprechenden höheren Homologen.

Besonders bevorzugt werden weitgehend uretdiongruppenfreie, Isocyanatgruppen aufweisende Polyisocyanate des oben genannten mittleren NCO-Gehaltes eingesetzt. Sie werden durch an sich bekannte katalytische Trimerisierung von 1,6-Diisocyanatohexan oder 1-Isocyanato-3,3,5-trimethyl-5-isocyanatomethylcyclohexan unter Isocyanuratbildung erhalten und weisen vorzugsweise eine mittlere NCO-Funktionalität von 3,2 bis 4,2 auf. Bevorzugt sind auch die durch Reaktion von 1,6-Diisocyanatohexan mit einem Unterschuß von Wasser erhaltenen, im wesentlichen Biuretgruppen aufweisenden trimeren Polyisocyanate mit einem NCO-Gehalt von 19 bis 24 %.

Als bevorzugte Beispiele für die Isoeyanatpräpolymere des Typs III) seien genannt: Umsetzungsprodukte der Polyisocyanate I) wie beispielsweise des Toluylendiisocyanates oder des 1,6-Diisocyanatohexans mit mehrwertigen Alkoholen.

Solche Produkte umfassen beispielsweise auch die Umsetzungsprodukte von 1-Isocyanato-3,3,5-trimethyl-5-isocyantomethylcyclohexan, von 1,6-Diisocyanatohexan und Toluylendiisocyanat , einschließlich dessen Isomerengemische sowie 4,4'-Diisocyanatodiphenylmethan, einschließlich dessen Isomerengemische mit unterschüssigen Mengen an C3 bis C 10 -Polyolen mit 3 oder 4 Hydroxylgruppen , wie Trimethylolethan oder -propan, Glycerin oder Pentaerythrit. Man kann die resultierenden Urethangruppen aufweisenden Polyisoyanate durch Umsetzung des niedermolekularen Polyols mit einem hohen Überschuß an Polyisocyanat des Typs I) und anschließende destillative Entfernung des überschüssigen Polyisocyanats herstellen. Man kann anstelle der Urethangruppen aufweisenden höherfunktionellen Polyisocyanate des Typs III) auch Verbindungen einsetzen, deren Urethangruppen ganz oder teilweise durch Harnstoffgruppen ersetzt sind; solche Verbindungen kann man durch Mitverwendung niedermolekularer Polyamine bei der Umsetzung mit den Polyisocyanaten des Typs I) erhalten.

Carbinolfunktionelle Polysiloxane 2) entsprechen der Formel (II)

H-X-R-[Si(Me₂)-O]ₙ-Si(Me₂) -R-X-H (II)

mit R = (CH₂) mit x = 2 bis 20
X = -O-(CHY-CHY-O)ₒ-
mit Y = Methyl- oder Wasserstoff, mit der Einschränkung, dass pro CHY-CHY-Einheit entweder beide Y für H stehen oder nur ein Y von beiden Methyl- bedeuten soll, und o = 0 bis 20 ,
und n = 4 bis 50
sowie Me = Methyl.

Bevorzugt sind carbinolfunktionelle Polysiloxane der Formel (II)

H-X-R-[Si(Me₂)-O]ₙ-Si(Me₂)-R-X-H (II)

mit R=(CH₂) mit x = 2 bis 15
X = -O-(CHY-CHY-O)ₒ-
mit Y in der o.g. Bedeutung und o = 0 bis 15,
und n = 4 bis 30
sowie Me = Methyl.
Ebenfalls bevorzugt sind carbinolfunktionelle Polysiloxane der Formel (II)

H-X-R-[Si(Me₂)-O]ₙ-Si(Me₂) -R-X-H (II)

mit R = (CH₂) mit x = 2 bis 8
X = -O-(CHY-CHY-O)ₒ-
mit Y in der o.g. Bedeutung und o =
und n = 4 bis 30
sowie Me = Methyl.

Besonders bevorzugt sind ebenfalls carbinolfunktionelle Polysiloxane der Formel (V):

H-(O-CH₂-CH₂)ₒ-O- (CH₂)ₘ-[Si(Me₂)-O]ₙ-Si(Me₂)- (CH₂)ₘ-(O-CH₂-CH₂)ₒ-O-H (V)

mit o = 2 bis 15, m = 2 bis 8, n = 10 bis 20 sowie Me = Methyl.

Die carbinolfunktionellen Polysiloxane der Formeln (II) und (V) sind nach an sich bekannten Verfahren des Standes der Technik herstellbar.
Üblicherweise wird ein carbinolfunktionelles Diol der Formel (VI)

H-O- (CH₂)ₘ-[Si(Me₂)-O]ₙ-Si(Me₂)- (CH₂)ₘ-O-H (VI)

mit cyclischen Polydimethylsiloxanen wie Octamethylcyclotetrasiloxan (D 4) oder Dekamethylcyclopentasiloxan (D5) unter Ringöffnung und Ketteneinschub äquilibriert, so dass offenkettige, terminal carbinolfunktionelle Polysiloxane resultieren.
Ein anderer Herstellungsweg geht aus von bishydrosilanfunktionellen Vorstufen der Formel (VII)

H-[Si(Me₂)-O]ₙ-Si(Me₂)-H (VII),

die dann mit monofunktionellen, ungesättigten Alkoholen der Formel (VIII)

H-O-(CH₂)ᵣ-CH=CH₂ (VIII)

mit r= 1 bis 15
in der platinkatalysierten Hydrosilylierung umgesetzt werden.

Die carbinolfunktionellen Polysiloxane der Formel (V)

H-(O-CH₂-CH₂)ₒ-O- (CH₂)ₘ-[Si(Me₂)-O]ₙ-Si(Me₂)- (CH₂)ₘ-(O-CH₂-CH₂)ₒ-O-H (V)

sind aus den Vorstufen der Formel (VI) durch die an sich bekannte alkalikatalysierte Umsetzung mit Ethylen- und/oder Propylenoxid erhältlich.

Die hydrophilierenden Komponenten 3) der Struktur (III) und/oder (IV)

H-O-(CHY-CHY-O)_{q}-H (III)

R-O-(CHY-CHY-O)ₘ-H (IV)

mit Y in der oben genannten Bedeutung
und q = 20 bis 40
sowie m = 25 bis 65
und R = Alkyl mit einem bis sechs Kohlenstoffatomen,
sind nach allgemein bekannten Verfahren des Standes der Technik durch alkalikatalysierte Alkoxylierung mono- bzw. difunktioneller Alkohole als Starter erhältlich.

Beispiele für geeignete monofunktionelle Starter sind einwertige Alkohole wie Methanol, Ethanol, Propanol und Butanol sowie Glykolmonoether wie Ethylenglykolmonomethylether oder ähnliche, von Di- oder Triglykolen abgeleitete Verbindungen wie beispielsweise Diethylenglykolmonobutylether.

Beispiele für geeignete difunktionelle Starter sind zwei Hydroxylfunktionen aufweisende Alkohole wie Ethylenglykol, Propylenglykol, Butandiol , Hexandiol oder deren kurzkettigen Alkoxylierungsprodukte mit Ethylenoxid bzw. Propylenoxid.

Die Alkoxylierung der beispielhaft genannten Starter kann mit Ethylenoxid oder Propylenoxid durchgeführt werden, so dass reine Ethoxylate oder reine Propoxylate erhalten werden. Es ist aber auch möglich, einen blockartigen Aufbau herzustellen oder mit beliebigen Gemischen beider Reaktanden Mischblöcke mit statistischer Verteilung der Ausgangsepoxide zu erzeugen.

Der Einsatz der beiden Typen von hydrophilierenden Komponenten der Strukturen (III) und (VI) ist nicht völlig beliebig. Sie sollte, insbesondere was die verwendeten Mengen angeht, stets sehr restriktiv erfolgen, um eine eingangs erwähnte negative Beeinflussung der Hydrophob- bzw. Oleophob-Eigenschaften der beabsichtigen Ausrüstung unbedingt zu vermeiden.

Bevorzugt sind hydrophilierende Komponenten der Strukturen (III) und (IV) mit einem gewichtsbezogenen Anteil von Propylenoxid an den Alkylenoxidkomponenten der Ausgangsverbindungen von mehr als 30 % und einem Molekulargewicht von mehr als 1500.

Die gemischtfunktionellen Verbindungen 4) beinhalten gleichzeitig mindestens eine tertiäre Aminogruppe oder eine Säuregruppe und mindestens eine Funktion aus der folgenden Gruppe, gebildet aus: primärer Aminogruppe, sekundärer Aminogruppe, Hydroxylfunktion, und Thiolfunktion.
Es handelt sich um :
(i) Einwertige Alkohole, insbesondere alkoxylierte aliphatische , cycloaliphatische , aromatische und heterocyclische sekundäre Amine wie z.B.: N,N-Dimethylethanolamin außerdem 1-Dimethylamino-pmpanol-(2), N-Methyl-N-beta-hydroxyethyl-anilin, N-Methyl- N-beta-hydroxypropylanilin, N-Ethyl-N-beta-hydroxyethyl-anilin, N-Butyl-N-beta-hydroxyethyl-anilin, N-Oxethylmorpholin und beta-Hydroyethyl-cholin.
(ii) Diole und Triole, insbesondere alkoxylierte aliphatische, cycloaliphatische, aromatische und heterocyclische primäre Amine , z.B.: N-Methyldiethanolamin, N-Butyl-diethanolamin, N-Oleyl-diethanolamin, N-Cyclohexytdiethanolamin, N,N-Dipropoxymethylamin, N,N-Dioxethylanilin, N,N-Dioxethyl-m-toluidin , N,N-Dioxethyl-p-toluidin, N,N- Dioxypropylnaphthalin, Dioxethylpiperazin, Tris-[2-hydroxypropyl-(1)]-amin, N,N'-Dimethyl-N,N'-bis-oxyethylhydrazin und N,N'-Dimethyl-N,N'bis-oxypropyl-ethylendiamin.
(iii) Aminoalkohole, erhältlich beispielsweise durch Hydrierung von Additionsprodukten von Alkylenoxyden und Acrylnitril an primäre Amine , wie z.B.: N-Methyl-N- (3-aminopropyl)-ethanolamin, N-Cyclohexyl-N-(3-aminopropyl)-propanol-2-amin, N,N-Bis-(3-aminopropyl)ethanolamin und N-(3-Aminopropyl)-diethanolamin.
(iv) Amine wie beispielsweise N,N -Dimethyl-ethylendiamin, 1-Dimethylamino-4-aminopentan, N,N-Dimethyl-propylendiamin- N-Aminopropyl-piperidin, N-Aminopropyl-morpholin, N-Aminopropylethylenimin, 1,3-Bis-piperidino-2-aminopropan.
(v) Diole oder Diamine , die folgende Strukturen haben :

   H₂N-CH₂-CH₂-NH-CH₂-CH₂-SO₃H (IX)

   H₂N-CH₂-CH₂-NH-CH₂-CH₂-COOH (X)

   H-O-(CHY-CHY-O)₂-CH₂-CH₂-CH-(SOA-CH₂-O(CHY-CHY-O)₂H (XI)

Als salzbildende Reaktanden für die multifunktionellen Verbindungen 4) kommen im Falle der Typen aus den Abschnitten (i) bis (iv) anorganische und organische Säuren in Betrarcht, wie beispielsweise Salzsäure, Salpetersäure, Schwefelsäure, Phosphorsäure, unterphosphorige Säure, Amidosulfonsäure, Ameisensäure, Essigsäure, Glykolsäure, Milchsäure, Chloressigsäure.
Als salzbildende Reaktanden für die multifunktionellen Verbindungen 4) kommen im Falle der Typen aus dem Abschnitt (v) Basen, insbesondere anorganische Basen wie Alkalihydroxide wie Natrium- oder Kaliumhydroxid oder Ammoniak in Frage.
Bei den multifunktionellen Verbindungen 4) des Typs (v) werden aber vorteilhaft bereits die Natriumsalze der Verbindungen in die Reaktion eingesetzt.
Bei den Natriumsalzen der Verbindungen (IX) und (X) geschieht dies üblicherweise vor oder zusammen mit dem Dispergierwasser, das Natriumsalz der Verbindung (XI) kann gleichzeitig mit dem carbinolfunktionellen Siloxan und den hydrophilierenden Komponenten in die Reaktion eingesetzt werden.
Generell sollte von den multifunktionellen Verbindungen 4) des Typs (v) möglichst wenig und nur soviel der Rezeptur zugegeben werden, dass die fertige erfindungsgemäße Dispersion zusammen im Gemisch mit kationischen Hilfsmitteln lagerstabile Mischungen ergibt und keine negativen Erscheinungen wie beispielsweise Ausfallungen, Niederschläge oder ein Bodensatz auf dem Boden des Gebindes. Hier ist auch der Durchschnittsfachmann mit einigen Vorversuchen gut beraten.

Bevorzugte gemischtfunktionelle Verbindungen 4), die gleichzeitig mindestens eine tertiäre Amino- und eine andere Funktion aus der oben genannten Gruppe aufweisen sind diejenigen aus den Gruppen (i), (ii) und (üi). Besonders bevorzugt sind die Gruppen (i) und (iii).

Bevorzugte gemischtfunktionelle Verbindungen 4), die gleichzeitig mindestens eine Säuregruppe und eine andere Funktion aus der oben genannten Gruppe aufweisen sind diejenigen aus der Gruppe (v). Besonders bevorzugt ist die Verbindung (XI).

Als Blockiermittel 5) für Isocyanatgruppen kommen insbesondere Verbindungen mit vorzugsweise einer gegenüber Isocyanatfunktionen reaktionsfähigen Gruppe in Frage, die mit organischen Isocyanaten bei über 50 °C , vorzugsweise zwischen 60 und 100 °C eine Additionsreaktion eingehen.
Geeignete derartige Blockierungsmittel sind beispielsweise sekundäre und/oder tertiäre Alkohole wie Isopropanol oder tert. Butylalkohol, CH-acide Verbindungen, wie beispielsweise Malonsäuredialkylester, Acetylaceton, Acetessigsäurealkylester und Cycloalkanoncarbonsaureester, wie beispielsweise Cyclopentanon-2-carbonsäureester, Oxime , wie beispielsweise Formaldoxim, Acetaldoxim, Methylethylketonoxim, Cyclohexanonoxim, Acetophenonoxim, Benzophenonoxim, Lactame wie epsilon-Caprolactam, Valerolactam, gamma-Butyrolactam, Phenole, wie beispielsweise Phenol oder o-, m-, p- Kresol, N-Alkylamide, wie beispielsweise N-Methylacetamid, Imide, wie beispielsweise Phthalimid, aber auch Stickstoffheterocyclen wie Imidazol, Triazol, Pyrazole wie 3,5-Dimethylpyrazol.

Vorzugsweise werden erfindungsgemäß verwendet Methylethylketoxim, epsilon-Caprolactam, CH-acide Verbindungen wie beispielsweise Malonsäure-Cl bis C4-ester, Acetessigsäure -C1 bis C4-ester, Acetylaceton oder Cycloalkanoncarbonsäureester wie beispielsweise Cyclopentanoncarbonsäureethylester sowie Pyrazole wie 3,5-Dimethylpyrazol.
Besonders bevorzugt sind Methylethylketon, 3,5-Dimethylpyrazol und Cyclopentanon-2-carbonsäureethylester.

Die in der Aufgabenstellung genannten Fluomarbone als Hydrophobier- und Oleophobiermittel sind im Folgenden beschrieben.
Die bei Oleophobier- und Hydrophobiermitteln wie den oben erwähnten Fluorcarbonen aus der Mitverwendung der erfindungsgemäßen hitzehärtenden Polyurethankompositionen resultierende Eigenschaftskombination ist:
- Hohe Beständigkeit der Oleophob-/ Hydrophobausrüstung bei wiederholten Wäschen und Reinigungen.
- Eine verbesserte Schmutzabweisung.
- Eine erleichterte Fleckenentfernbarkeit.

Die hier genannte Eigenschaftskombination ist besonders für Oberbekleidung, Markisen und Textilien allgemeiner Art von Bedeutung.
Der Begriff Hydropob-/ Oleophobausrüstung im Sinne der vorliegenden Erfindung umfasst die Ausrüstung mit den erfindungsgemäßen wässrigen Dispersionen hitzehärtender Polyurethankompositionen und perfluorierten Verbindungen (Fluorcarbonen) sowohl in Bezug auf alle drei oben genannte Wirkungen der Eigenschaftskombinationals auch eine einzelne davon oder eine Zweierkombination.
Die als Oleophobier- und Hydrophobiermittel verwendbaren Fluorcarbone haben Fluorgehalte von 0,2 bis 65 , vorzugsweise 1 bis 35 Gewichts- %. Dabei ist das Fluor stets in Form perfluorierter C3- bis C 20 - Alkylgruppen gebunden vorhanden, die vorzugsweise Bestandteile polymerer Verbindungen sind, die wasserunlöslich sind.

Diese Polymeren werden nach bekannten Verfahren des Standes der Technik hergestellt unter Verwendung von Monomeren, welche Acrylsäure - bzw. Methacrylsäureester perfluorierter Alkohole der Formel (XII) sind.

HO-(CH₂)_{y}-R_{f} (XII)

mit R_{f} = perfluorierter Alkylrest mit 3 bis 20, vorzugsweise von 4 bis 12 Kohlenstoffatomen
und y eine ganze Zahl von 1 bis 4, vorzugsweise 2

Die Acrylsäure- bzw. Methacrylsäureester haben die Struktur (XIII) bzw. (XIV):

CH₂=CH₂-CO-O-(CH₂)_{y}-R_{f} (XIII)

CH₂=CH(CH₃)-CO-O-(CH₂)_{y}-R_{f} (XIV)

mit R_{f} und y in der o.g. Bedeutung

Hierdurch wird ersichtlich, daß es sich bei den Oleophobier- und Hydrophobiermitteln um Kammpolymere mit einen Backbone aus Polyacryl- bzw. Polymethacrylsäureestern handelt, deren estergebundene Perfluoralkohole (XII) die seitenständigen Gruppen darstellen.

Zur Gewährleistung der gewünschten Eigenschaften, insbesondere der Wasserdispergierbarkeit werden bei der Polymerisation perfluoralkylgruppenfreie Comonomere mitverwendet wie in den Formeln (XV) und (XVI) beschrieben:

CH₂=CH₂-CO-O-R_{nf} (XV)

CH₂=CH(CH₃)-CO-O-R_{nf} (XVI)

mit R_{nf} als perfluoralkylgruppenfreier organischer Rest,
der eine Alkyl- oder Alkylenrest von 8 bis 22, vorzugsweise 12 bis 22 Kohlenstoffatome aufweist, oder einen tertiäre Aminogruppen aufweisenden Rest der Formel (XVII) :

-(CH₂)ₑ-NR₂ (XVI)

mit e als ganze Zahl von 1 bis 10 , vorzugsweise 2 bis 5 und R in der o.g. Bedeutung,
oder einen Alkoxylatketten aufweisenden Rest der Formel (XVIII) :

-(CHY-CHY-O)_{q}-R (XVIII)

mit Y und R in der oben genannten Bedeutung
und q = 4 bis 15, vorzugsweise 4 bis 12.

Weitere mögliche Comonomere sind Styrol , Vinylester wie Vinylacetat und Vinylpropionat, Hydroxyethylmethacrylat.
Beschrieben werden solche hier beschriebenen perfluorgruppenhaltige Polyacrylsäure- bzw. Polymethacrylsäureester in DE 1595017, DE 1595018, DE 2939549, DE 2134978, DE 2660200, DE 1106960 und DE 1468295.

### Durchführung des erfindungsgemäßen Verfahrens

Zur Herstellung der erfindungsgemäßen Dispersion einer hitzehärtenden Polyurethankomposition werden zuerst die Isocyanate 1) der Formel (I) vorgelegt. Dann wird vorab die Gesamtmenge des Blockiermittels für Isocyanatgruppen 4) zugegeben und die Reaktion gestartet und dann das carbinolfuaktionelle Polysiloxan 2) und die hydrophilierende Komponente 3) sowie ggf. Verbindung (XI) zugesetzt. Die Reaktionstemperatur beträgt üblicherweise 60 bis 150 °C, bevorzugt sind 70 bis 130 °C. Bei einer anderen Verfahrensweise werden zuerst das carbinolfunktionelle Polysiloxan 2) und die hydrophilierende Komponente 3) sowie ggf. die Verbindung (XI) zum vorgelegten Isocyanat vorgelegt und nach einer gewissen Vorreaktion das Blockiermittel für Isocyanatgruppen 5) zugegeben.
Danach wird die gemischtfunktionelle Verbindung 4), sofern zu den Typen (i), (ii), (iii) und (iv) gehörig, zugegeben. Die Verbindungen (IX) und (X) werden erst gegen Ende der Reaktion nach Erreichen des rechnerischen Isocyanatgehaltes zugegeben, da sie üblicherweise als wässrige Zubereitung handelsüblich sind.
Dann wird noch einige Zeit gerührt.

Von den gemischtfunktionellen Verbindungen 4) werden den Reaktionsgemisch stets solche Mengen zugesetzt, dass die erfindungsgemäßen blockierten Isocyanate den nötigen Gehalt an potentiell kationischen bzw. anionischen Gruppen enthalten.

Für die Umsetzung der oben genannten Komponenten wird jeweils ein Äquivalentverhältnis von NCO-Gruppen des Isocyanates zu den isocyanatreaktiven Gruppen von 1: 0,95 bis 1: 1,15 bevorzugt 1:1 bis 1,0:1,1 eingehalten.

Bei Einsatz CH-acide Gruppen aufweisender Blockiermittel für Isocyanatgruppen ist die Verwendung basischer Katalysatoren notwendig, wie beispielsweise Diazabicyclooctan, Triethylamin, Alkalialkoholaten wie z.B.: Natriumethylat oder Alkaliphenolaten wie z.B.: Natriumphenolat. Werden Blockiermittel mit OH- oder NH- Funktionen eingesetzt, so kann eine Zugabe von Zinnverbindungen wie beispielsweise Zinndioctoat oder Dibutylzinndilaurat vorteilhaft sein.

Zum Ende der Reaktion wird das Reaktionsgemisch auf Abreaktion sämtlicher Isocyanatfunktionen kontrolliert. Dies kann durch Titration geschehen. Vorteilhaft ist auch die Anfertigung eines Infrarotspektrums und Auswertung der Bande bei 2260 bis 2275 cm¹. Die Umsetzung ist dann beendet, wenn der Isocyanatgehalt nicht mehr als 0,1 Gew.-% oberhalb des Wertes liegt, der bei vorgegebener Stöchiometrie errechnet werden kann, bzw. wenn keine Isocyanatbande mehr zu sehen ist.
Ist die Isocyanatfreiheit gegeben, wird entweder die zur Kationenbildung notwendige Menge Säure unmittelbar in das Reaktionsgemisch eingerührt und im Anschluß ggf. durch Wasserzugabe verdünnt, oder sofort eine verdünnte Säure zugegeben.

Durch Mitverwendung an sich bekannter Katalysatoren wie Dibutylzinndilaurat, Zinndioctoat oder 1,4-Diazabicyclo[2,2,2]octan und oder weiterer tertiären Stickstoff oder Zinn enthaltender Verbindungen, ggf. aber auch Bismutverbindungen oder anderer in der Polyurethanchemie üblicher Katalysatoren in Mengen von 10 bis 1000 ppm , bezogen auf die Reaktionskomponenten, kann die Reaktion beschleunigt werden.

Obwohl es oft von besonderem Vorteil ist, auf organische Lösungsmittel völlig zu verzichten, können bei der Herstellung der erfindungsgemäßen hitzehärtenden Polyurethankompositionen natürlich auch organische Lösungsmittel eingesetzt werden. Bevorzugte organische Lösungsmittel umfassen unter anderem Ketone wie Aceton, Methylethylketon und Cyclohexanon, Ether, wie Diethyl- und Dibutylether, Tetrahydrofuran und Dioxan, Ether und/oder Ester von Ethylenglykol und Propylenglykol wie Ethylenglykolmonomethyl- und - monoethylether, Ethylenglykolmonomethyl- und monoethyletheracetat, C2 bis C 4- Carbonsäure -C1 bis C6-alkylester wie Essigsäureethyl- und -butylester, Amide wie N,N-Dimethylformamid, N,N,Dimethylacetamid, Sulfolan, N-Methylcaprolactam, Pmpylenglykoldiacetat, Benzin und Aromaten wie Benzol, Toluol und Xylole.
Die Verwendung organischer Lösungsmittel, die NCO-reaktive Gruppen enthalten, wie beispielsweise Methanol, Ethanol, n- oder Isopropanol sollte bei der Herstellung der erfindungsgemäßen Dispersionen unterbleiben.
Aprotische Lösungsmittel können aber auch als Hilfslösungsmittel und Verdünnungsmedium für die Reaktion zugegeben werden, und nach der Zugabe der Säure und des Dispergierwassers wieder abdestilliert werden. Dies ist aber keine bevorzugte Ausführungsform.
In einer bevorzugten Ausführungsform wird die Herstellung der erfindungsgemäßen Dispersion lösungsmittelfrei und auch ohne Schwermetalle (beispielsweise Zinnkatalysatoren) durchgeführt.

Als gegebenenfalls anwesende Hilfs- und Zusatzstoffe können folgende Zusätze fungieren, die entweder mit dem Dispergierwasser oder nach Zugabe des Dispergierwassers zugesetzt werden können:
Entlüfter, Verlaufshilfsmittel, Deblockierungskatalysatoren, Egalisiermittel, Tenside, Weichmacher, Antistatika.

Selbstverständlich können auch die für sich allein nicht vernetzungfähigen Hilfsmittel, für welche die hitzehärtende Polyurethankomposition als Fixiermittel fungieren kann, dem Dispergierwasser beigegeben werden oder nach dem Zusatz des Dispergierwassers zum Ansatz hinzugefügt werden.

Solche Hilfsmittel, die für sich gesehen ggf. nicht waschpermanent sind, sollen hier nur beispielhaft genannt werden:
Weichmacher, Antistatika, Vernähbarkeitsverbesserer, Oleophobier- und Hydrophobiermittel.
Unter Oleophobier-und Hydrophobiermittel sollen neben den bekannten Paraffin- und Silicondispersionen vor allem die oben erwähnten Fluorcarbone verstanden werden.

Hier die Zusammensetzung der hitzehärtenden Polyurethankomposition, bezogen stets auf 100% Feststoffgehalt, in Gewichtsteilen und ohne ggf. anwesende Hilfs- und Zusatzstoffe :
1) Polyisocyanate der Formel (I) : 35 bis 60
2) Carbinolfunktionelle Siloxane der Formel (II) : 10 bis 25
3) Hydrophilierende Komponente der Formel (III) oder (IV): 7,5 bis 20
4) Gemischtfunktionelle Verbindung : 0,5 bis 2,5
5) Blockiermittel für Isocyanatgruppen : 10 bis 30

Die erfindungsgemäßen Dispersionen hitzehärtender Polyurethankompositionen können auf Feststoffgehalte innerhalb weiter Grenzen eingestellt werden. Der Feststoffgehalt kann in der Regel 10 bis 80 , vorzugsweise 20 bis 50 Gew.-% betragen.
Das Dispergieren des Reaktionsgemisches aus den Komponenten 1), 2), 3), 4) und 5) geschieht zweckmäßigerweise entweder durch Ansäuern und nachfolgendes Verdünnen mit Wasser oder durch gleichzeitiges Vermischen mit Säure und Dispergierwasser unter Rühren, sofern es sich bei den gemischtfunktionellen Verbindungen 4) um Strukturen mit tertiären Aminogruppen handelt.

Die Temperatur beim Dispergieren kann im allgemeinen 20 bis 100, vorzugsweise 30 bis 80 °C betragen. Die erhaltenen wässrigen Dispersionen enthalten die hitzehärtende Polyurethankomposition im allgemeinen als Teilchen mit einer mittleren Teilchengröße D 50 von 10 nm bis 500 µm, vorzugsweise 10 nm bis 300 µm.
Der mittlere Teilchendurchmesser d 50 ist der Durchmesser, oberhalb und unterhalb dessen jeweils 50 Gew. % der Teilchen liegen. Er kann durch Ultrazentrifugen-Messungen (W. Scholtan, H. Lange, Kolloid. Z. und Z. Polymere , 250, (1972), 782-7969 oder mittels Elektronenmikroskopie und anschließender Teilchenauszählung (G. Kämpf, H. Schuster, Angew. Makromolekulare Chemie, 14, (1970), 111-129) bestimmt werden.

### Anwendungstechnischer Teil

Es hat sich bei den anwendungstechnischen Prüfungen nicht nur eine gute hydrophobierende Wirkung des erfindungsgemäßen hitzehärtenden Polyurethans gezeigt, sondern auch eine sehr gute Wirksamkeit als Fixiermittel für andere, nichtfunktionelle bzw. selbst nicht zur Vernetzung befähigte Hilfsmittel. Parallel hierzu war ein angenehmer Griff der ausgerüsteten Materialien festzustellen, der ganz im Gegensatz zu der oft festgestellten spürbaren Verhärtung des Ausrüstungsgutes bei Behandlung mit filmbildenden Materialien festzustellen ist, die kundenseitig oft als störend, wenn nicht sogar als inakzeptabel bewertet wird.

Zumal Extender für Fluorcarbone zeigen oftmals dieses Verhalten, dem dann durch Einsatz von Weichmachern entgegengewirkt werden muß. Dabei kommt erschwerend hinzu, dass die zum Ausgleich durchgeführte Weichmachung oftmals die Hydrophob- bzw. Oleophobwirkung der hiefür eigens eingesetzten Hilfsmittel wieder zu Nichte macht.

Die erfindungsgemäßen Dispersionen hitzehärtender Polyurethane können im Gemisch mit dem Hydrophobier- bzw. Oleophobiermittel als Fertigzubereitung in den Handel kommen; sie können aber auch den wässrigen Ausrüstungsflotten der Hydrophobier- bzw. Oleophobiermittel zugesetzt werden.
Der Auftrag der Behandlungsflotte kann, wie in der Textilindustrie üblich, beispielsweise im Ausziehverfahren erfolgen oder durch Foulardieren, Pflatschen, Sprühen und durch Schaumauftrag.
Die Konzentration der erfindungsgemäßen hitzehärtenden Polyurethane kann innerhalb weiter Grenzen variiert werden. Sie richtet sich nach der Applikationsmethode und nach dem gewünschten Eigenschaften , die von dem ausgerüsteten textilen Material verfüllt werden müssen.
Bezogen auf auszurüstende Textilien werden die mit den erfindungsgemäßen hitzehärtenden Polyurethanen im Gemisch vorliegenden Hilfsmittel der Ausrüstungsflotte in der Regel in Konzentrationen von 0,5 bis 20 Gew.-% zugesetzt. Der pH-Wert der Flotte wird im allgemeinen auf 4 bis 7 , vorzugsweise von 4,5 bis 6 eingestellt. Selbstverständlich können der Flotte neben den erfindungsgemäßen hitzehärtenden Polyurethanen noch andere Hilfsmittel wie Antistatika, Weichmacher, Schiebefestmittel und dergleichen zugegeben werden.
Die Trocknung der mit der beschriebenen Flotte behandelten Textilien erfolgt zweckmäßigerweise bei 80 bis 110°C, anschließend muß noch ein weiteres Aufheizen zur Nachkondensation auf 130 bis 200 °C für 30 sec. bis 6 Minuten erfolgen.

### Beispiele

### Beispiel 1: Herstellung eines Fluorcarbons

100 Gew. Teile eines handelsüblichen C8-Perfluorakylethylacrylates werden mit 32,3 Gew.-Teilen eines handelsüblichen Methacrylsäureesters eines Polyethylenglykolmonomethylesters des Molekulargewichtes 350, 24,2 Gew. Teilen eines handelsüblichen Butylacrylates und 4,9 Gew.-Teilen N,N-Dimethylaminoethylmethacrylat in 338 Gewichtsteilen reinen Acetons vorgelegt und homogen gerührt.
Dann werden 11 Gew.-Teile 2,2'Azo-bis(2-methylbutyronitril), gelöst in 10 Gew.-Teilen Aceton dem Reaktionsgemisch zugegeben und der Ansatz innerhalb von 30 Min. auf Rückflusstemperatur aufgeheizt. Nach 8 Std. Reaktionszeit wird der Feststoffgehalt des Reaktionsgemisches ermittelt; er sollte größer als 26 % sein, sonst muß die Reaktionzeit verlängert werden.
Ist der Feststoffgehalt bei mehr als 26 % angekommen, so werden 11 Gew.-Teile 2,2'Azo-bis(2-methylbutyronitril), gelöst in 10 Gew.-Teilen Aceton zu dem Reaktionsgemisch zugegeben und der Ansatz noch einmal 3 Std. unter Rückfluß gerührt.
Danach werden noch einmal 11 Gew.-Teile 2,2'Azo-bis(2-methylbutyronitril), gelöst in 10 Gew.-Teilen Aceton zu dem Reaktionsgemisch zugegeben und der Ansatz weitere 3 Std. bei Rückflusstemperatur gerührt. Danach sollte der Feststoffgehalt bei 30 % liegen. Danach wird unter Rühren auf 30 °C abkühlen gelassen und mit 1,6 Gew.-Teilen 75 % iger Phosphorsäure angesäuert; dann werden unter Rühren 470 Gew.-Teile vollentsalztes Wasser zulaufen gelassen. Zur Entfernung des Acetons wird dieses abdestilliert und nach der Destillation die wässrige milchig-weiße Dispersion über ein 100er µ-Tuch filtriert und ggf. durch Wasserzugabe auf 25 % Feststoffgehalt eingestellt.

### Beispiel 2: Herstellung einer erfindungsgemäßen wässrigen Dispersion einer hitzehärtenden Polyurethankomposition

150,2 Gew.-Teile eines handelsüblichen Isocyanates auf Basis trimerisierten 1,6-Isocyanatohexans mit einer mittleren Funktionalität von 3,5 und einem Isocyanatgehalt von 22,3 % wird mit 4,5 Gew.-Teilen eines handelsüblichen Sulfonatdiols, beschreibbar als Natriumsalz der durch Formel (XI) charakterisierten Verbindung, OH-Zahl 261 mg KOH/g, 51,6 Gew.-Teilen eines carbinolfunktionellen Polysiloxans der Struktur: H-(O-CH₂-CH₂)₁₀-O- (CH₂)₃-[Si(Me₂)-O]₂₁-Si(Me₂)- (CH₂)₃-(O-CH₂-CH₂)₁₀-O-H und 36,4 Gew.-Teilen eines auf Diethylenglykolmonobutylether gestarteten Polyethers mit einem Molgewicht von 2250 und einer statistisch aufgebauten Polyetherkette, aufgebaut durch die Reaktion von 47 Gew.-Teilen Ethylenoxid und 48 Gew.-Teilen Propylenoxid sowie endverkappt durch weitere 5 Gew.-Teile Ethylenoxid vorgelegt und auf 70 °C aufgeheizt. 0,1 Gew.-Teile Dibutylzinndilaurat werden dem Ansatz hinzugefügt. Dann werden portionsweise 60,8 Gew.-Teile 3,5 Dimethylpyrazol zugegeben, dergestalt, dass die exotherme Reaktion nach jeder Zugabe zuerst abgewartet wird vor einer erneuten Zugabe.
Nach erfolgter Zugabe wird so lange bei 115 bis 120 °C gerührt, bis das Reaktionsgemisch im Infrarotspektrum keine Isocyanatbande mehr zeigt. Danach wird die Temperatur auf unter 100 °C abfallen gelassen und 616,6 Gew.-Teile vollentsalztes Wasser zugegeben. Es wird noch bei gleicher Temperatur nachgerührt, bis das Reaktionsgemisch homogen ist, dann wird unter Rühren abkühlen gelassen und durch ein 100er µ-Tuch filtriert.
Die Dispersion ist milchig-weiß und zeigt einen schwachen Blaustich und 33 % Feststoffgehalt.

### Beispiel 3: Herstellung einer erfindungsgemäßen wässrigen Dispersion einer hitzehärtenden Polyurethankomposition

258 Gew.-Teile eines handelsüblichen Isocyanates auf Basis eines dünnschichtdestillierten Präpolymers von Toluylendiisocyanat mit Trimethylolpropan und Diethylenglykol, enthaltend 25 % Ethylacetat als Lösungsmittel, und einem Isocyanatgehalt von 13 % wird mit 51,6 Gew.-Teilen eines carbinolfunktionellen Polysiloxans der Shuktur: H-(O-CH₂-CH₂)₁₀-O- (CH₂)₃-[Si(Me₂)-O]₂₁-Si(Me₂)- (CH₂)₃-(O-CH₂-CH₂)₁₀-O-H und 38,2 Gew.-Teilen eines auf Diethylenglykolmonobutylether gestarteten Polyethers mit einem Molgewicht von 2250 und einer statistisch aufgebauten Polyetherkette, aufgebaut durch die Reaktion von 47 Gew.-Teilen Ethylenoxid und 48 Gew.-Teilen Propylenoxid sowie endverkappt durch weitere 5 Gew.-Teile Ethylenoxid vorgelegt und auf 70 °C aufgeheizt.
Dann werden portionsweise 52,5 Gew.-Teile 3,5 Dimethylpyrazol zugegeben, dergestalt, dass die exotherme Reaktion nach jeder Zugabe zuerst abgewartet wird vor einer erneuten Zugabe.
Nach erfolgter Zugabe werden 9,8 Gew.-Teile N,N-Dimethylethanolamin zugegeben und danach so lange bei 115 bis 120 °C gerührt, bis das Reaktionsgemisch im Infrarotspektrum keine Isocyanatbande mehr zeigt. Danach wird die Temperatur auf unter 100 °C abfallen gelassen und 701,6 Gew.-Teile vollentsalztes Wasser zugegeben. Es wird noch bei gleicher Temperatur nachgerührt, bis das Reaktionsgemisch homogen ist, und das enthaltene Lösungsmittel abdestilliert. Dann wird unter Rühren abkühlen gelassen und durch ein 100er µ-Tuch filtriert.
Die Dispersion ist milchig-weiß und zeigt einen schwachen Blaustich und 33 % Feststoffgehalt.

### Beispiel 4: Herstellung einer nicht erfindungsgemäßen wässrigen Dispersion einer hitzehärtenden Polyurethankomposition

258 Gew.-Teile eines handelsüblichen Isocyanates auf Basis eines dünnschichtdestillierten Präpolymers von Toluylendiisocyanat mit Trimethylolpropan und Diethylenglykol, enthaltend 25 % Ethylacetat als Lösungsmittel, und einem Isocyanatgehalt von 13 % wird mit 21,0 Gew.-Teilen eines handelsüblichen Sulfonatdiols, beschreibbar als Natriumsalz der durch Formel (XI) charakterisierten Verbindung, OH-Zahl 261 mg KOH/g, 38,2 Gew.-Teilen eines auf Diethylenglykolmonobutylether gestarteten Polyethers mit einem Molgewicht von 2250 und einer statistisch aufgebauten Polyetherkette, aufgebaut durch die Reaktion von 47 Gew.-Teilen Ethylenoxid und 48 Gew.-Teilen Propylenoxid sowie endverkappt durch weitere 5 Gew.-Teile Ethylenoxid vorgelegt und auf 70 °C aufgeheizt. 0,1 Gew.-Teile Dibutylzinndilaurat werden dem Ansatz hinzugefügt.
Dann werden portionsweise 53,4 Gew.-Teile 3,5- Dimethylpyrazol zugegeben, dergestalt, dass die exotherme Reaktion nach jeder Zugabe zuerst abgewartet wird vor einer erneuten Zugabe.

Nach erfolgter Zugabe wird so lange bei 115 bis 120 °C gerührt, bis das Reaktionsgemisch im Infrarotspektrum keine Isocyanatbande mehr zeigt. Danach wird die Temperatur auf unter 100 °C abfallen gelassen und 621,5 Gew.-Teile vollentsalztes Wasser zugegeben. Es wird noch bei gleicher Temperatur nachgerührt, bis das Reaktionsgemisch homogen ist, und das enthaltene Lösungsmittel abdestilliert. Dann wird unter Rühren abkühlen gelassen und durch ein 100er µ-Tuch filtriert.
Die Dispersion ist milchig-weiß und zeigt einen schwachen Blaustich und 33 % Feststoffgehalt.

### Vertaglichkeit der erfindungsgemäßen Dispersionen hitzehärtender Polyurethankompositionen

Zur Illustration der Lagerbeständigkeit der Mischungen aus dem in Beispiel 1 beschriebenenen Fluorcarbon mit den Dispersionen hitzehärtender Polyurethankompositionen wurden diese Mischungen für 4 Wochen bei 50 °C gelagert. Die Abmischungen wurden hergestellt mit den Mischungsverhältnissen 90 Gew.-Teile Fluorcarbon/ 10 Gew.-Teile Dispersion bzw. 85/ 15, 80/20 und 75/25.

Die folgende Tabelle gibt Übersicht µuber die Mischbarkeit bzw. Lagerstabilität :

| Mischungsverhältnis: Fluorcarbon / wässrige Dispersion (Gewichtsteile) | wässrige Dispersion aus Beispiel: | | |
|---|---|---|---|
| | 2 (erfindungsgemaß) | 3 (erfindungsgemäß) | 4 |
| 90/ 10 | Mischung 1.1 lagerstabil | Mischung 2.1 lagerstabil | Mischung 3.1 Bodensatz |
| 85/ 15 | Mischung 1.2 lagerstabil | Mischung 2.2 lagerstabil | Mischung 3.2 Bodensatz |
| 80/ 20 | Mischung 1.3 lagerstabil | Mischung 2.3 lagerstabil | Mischung 3.3 Bodensatz |
| 75/ 25 | Mischung 1.4 lagerstabil | Mischung 2.4 lagerstabil | Mischung 3.4 Bodensatz |

### Ausrüstungsversuche mit den erfindungsgemaßen Dispersionen hitzehärtender Polyurethankompositionen

Die Ausrüstungsversuche wurden auf Polyester-Baumwollmischung der Zusammensetzung 65/35 durchgeführt. Hierzu wurden von den oben genannten Mischungen 1.1 bis 3.4 Behandlungsflotten enthaltend jeweils 20, 30, 40, 50, 60, 70 und 80 g/l angesetzt und damit die Prüfstücke aus der Polyester/Baumwollmischung auf dem Foulard behandelt. Die Flottenaufnahme war 75 %.
Die ausgerüsteten Prüfstücke wurden dann für 5 Minuten bei 150 °C im Umlußtrockenschrank liegend auf Gitterrosten getrocknet.
Dann wurde die Prüfung der Ölnote und der Spraytest vorgenommen.

Danach wurden 10 Wäschen in der Haushaltswaschmaschine durchgeführt und die Prüfstücke erneut für 5 Minuten bei 150 °C wie oben beschrieben getrocknet. Danach wurden erneut 10 Wäschen in der Haushaltswaschmaschine wie oben beschrieben durchgeführt und die Prüfstücke wie oben beschrieben getrocknet.

### Ergebnis der Mischungen 1.1 bis 1.4

### a) Werte unmittelbar nach der Ausrüstung

| Einsatzkonzentration[g/l]: Mischung | | 20 | 30 | 40 | 50 | 60 | 70 | 80 |
|---|---|---|---|---|---|---|---|---|
| 1.1 | Spraytest | >50 | 50 | 70 | 90 | 100 | 100 | 100 |
| 1.1 | Ölnote | 3 | 4 | 5 | 6 | 6 | 6 | 6 |
| 1.2 | Spraytest | >50 | 50 | 70 | 80 | 100 | 100 | 100 |
| 1.2 | Ölnote | 2 | 3 | 4 | 5 | 6 | 6 | 6 |
| 1.3 | Spraytest | >50 | >50 | 50 | 70 | 90 | 100 | 100 |
| 1.3 | Ölnote | 1 | 2 | 3 | 4 | 5 | 6 | 6 |
| 1.4 | Spraytest | >50 | >50 | 50 | 60 | 80 | 90 | 100 |
| 1.4 | Ölnote | 3 | 4 | 5 | 6 | 6 | 6 | 6 |

| Einsatzkonzentration[g/l]: Mischung | | 20 | 30 | 40 | 50 | 60 | 70 | 80 |
|---|---|---|---|---|---|---|---|---|
| 2.1 | Spraytest | 50 | 70 | 90 | 100 | 100 | 100 | 100 |
| 2.1 | Ölnote | 4 | 5 | 6 | 6 | 6 | 6 | 6 |
| 2.2 | Spraytest | 60 | 80 | 90 | 100 | 100 | 100 | 100 |
| 2.2 | Ölnote | 4 | 4 | 5 | 5 | 6 | 6 | 6 |
| 2.3 | Spraytest | >50 | 50 | 60 | 70 | 80 | 100 | 100 |
| 2.3 | Ölnote | 1 | 2 | 3 | 4 | 5 | 6 | 6 |
| 2.4 | Spraytest | >50 | 50 | 50 | 70 | 80 | 100 | 100 |
| 2.4 | Ölnote | 1 | 2 | 3 | 4 | 5 | 6 | 6 |

| Mischung (die Mischungen 3.1 bis 3.4 wurden frisch zubereitet) | | | | | | | | |
|---|---|---|---|---|---|---|---|---|
| 3.1 | Spraytest | >50 | 50 | 70 | 90 | 100 | 100 | 100 |
| 3.1 | Ölnote | 3 | 4 | 5 | 6 | 6 | 6 | 6 |
| 3.2 | Spraytest | >50 | 50 | 70 | 80 | 100 | 100 | 100 |
| 3.2 | Ölnote | 2 | 3 | 4 | 5 | 6 | 6 | 6 |
| 3.3 | Spraytest | >50 | >50 | 50 | 70 | 90 | 100 | 100 |
| 3.3 | Ölnote | 1 | 2 | 3 | 4 | 5 | 6 | 6 |
| 3.4 | Spraytest | >50 | >50 | 50 | 60 | 80 | 90 | 100 |
| 3.4 | Ölnote | 3 | 4 | 5 | 6 | 6 | 6 | 6 |

### b) Werte nach 10 Haushaltswäschen

| Einsatzkonzentration[g/l]: | | 20 | 30 | 40 | 50 | 60 | 70 | 80 |
|---|---|---|---|---|---|---|---|---|
| Mischung | | | | | | | | |
| 1.1 | Spraytest | >50 | >50 | 60 | 80 | 90 | 100 | 100 |
| 1.1 | Ölnote | 2 | 3 | 4 | 5 | 6 | 6 | 6 |
| 1.2 | Spraytest | >50 | >50 | 60 | 70 | 90 | 100 | 100 |
| 1.2 | Ölnote | 2 | 3 | 4 | 5 | 5 | 6 | 6 |
| 1.3 | Spraytest | >50 | >50 | >50 | 50 | 80 | 90 | 100 |
| 1.3 | Ölnote | 1 | 1 | 2 | 4 | 5 | 6 | 6 |
| 1.4 | Spraytest | >50 | >50 | >50 | 60 | 70 | 80 | 100 |
| 1.4 | Ölnote | 1 | 1 | 2 | 3 | 4 | 5 | 6 |
| | | | | | | | | |

| Einsatzkonzentration[g/l]: | | 20 | 30 | 40 | 50 | 60 | 70 | 80 |
|---|---|---|---|---|---|---|---|---|
| Mischung | | | | | | | | |
| 2.1 | Spraytest | >50 | 50 | 60 | 80 | 90 | 100 | 100 |
| 2.1 | Ölnote | 2 | 4 | 5 | 6 | 6 | 6 | 6 |
| 2.2 | Spraytest | 50 | 50 | 70 | 80 | 90 | 100 | 100 |
| 2.2 | Ölnote | 4 | 4 | 5 | 5 | 6 | 6 | 6 |
| 2.3 | Spraytest | >50 | >50 | 50 | 60 | 80 | 90 | 100 |
| 2.3 | Ölnote | 1 | 2 | 3 | 4 | 5 | 6 | 6 |
| 2.4 | Spraytest | >50 | >50 | 50 | 60 | 80 | 90 | 100 |
| 2.4 | Ölnote | 1 | 1 | 2 | 4 | 4 | 5 | 6 |

| Mischung (die Mischungen 3.1 bis 3.4 wurden frisch zubereitet) | | | | | | | | |
|---|---|---|---|---|---|---|---|---|
| 3.1 | Spraytest | >50 | >50 | 60 | 80 | 90 | 100 | 100 |
| 3.1 | Ölnote | 2 | 3 | 4 | 5 | 5 | 6 | 6 |
| 3.2 | Spraytest | >50 | >50 | 60 | 70 | 90 | 90 | 100 |
| 3.2 | Ölnote | 2 | 2 | 3 | 4 | 5 | 6 | 6 |
| 3.3 | Spraytest | >50 | >50 | >50 | 60 | 80 | 90 | 100 |
| 3.3 | Ölnote | 1 | 1 | 2 | 3 | 4 | 5 | 6 |
| 3.4 | Spraytest | >50 | >50 | 50 | 60 | 80 | 90 | 90 |
| 3.4 | Ölnote | 1 | 1 | 2 | 3 | 4 | 5 | 6 |

## Patentansprüche

1. Wäßäge Dispersion einer hitzehärtenden Polyurethankomposition, erhältlich durch:
a) Reaktion von:
1) 35 bis 60 Gewichtsteilen von Polyisocyanaten der Formel (I)
Q(NCO)ₚ (I)
mit p größer als 1,5,
2) 10 bis 25 Gewichtsteilen carbinolfunktioneller Polysiloxane der Formel (II)
H-X-(R)ₓ-[Si(Me₂)-O]ₙ-Si(Me₂)-(R)ₓ-X-H (II)
mit R = (CH₂) mit x = 2 bis 20
X = -O-(CHY-CHY-O)ₒ- mit Y = Methyl- oder Wasserstoff, mit der Einschränkung, dass pro CHY-CHY- Einheit entweder beide Y für H stehen oder nur ein Y von beiden Methyl- bedeuten soll, und o = 0 bis 20 ,
und n = 4 bis 50
sowie Me = Methyl,
3) 7,5 bis 20 Gewichtsteilen hydrophilierender Komponenten der Struktur (III) und/oder (IV)
H-O-(CHY-CHY-O)_{q}-H (III)
R-O-(CHY-CHY-O)ₘ-H (IV)
mit Y in der oben genannten Bedeutung
und q = 20 bis 40
sowie m = 25 bis 65
und R = Alkyl mit einem bis sechs Kohlenstoffatomen
4) 0,5 bis 2,5 Gewichtsteilen einer gemischtfunktionellen Verbindung, die gleichzeitig mindestens eine tertiäre Amino- oder eine Säuregruppe und mindestens eine Funktion aus der folgenden Gruppe, gebildet aus : primärer Aminofunktion, sekundärer Aminofunktion, Hydroxylfunktion und Thiolfunktion aufweist,
5) 10 bis 30 Gewichtsteile eines Blockiermittels für Isocyanatgruppen, (bezogen stets auf 100 % Feststoffgehalt und ohne ggf. anwesende Hilfs- und Zusatzstoffe),
b1) Ansäuern des Reaktionsgemisches aus 1), 2), 3), 4) und 5) und
b2) Zugabe von Wasser sowie ggf. weiterer Hilfs- und Zusatzstoffe.

2. Wässrige Dispersion einer hitzehartenden Polyurethankomposition gemäß Anspruch 1, **dadurch gekennzeichnet, dass** die Polyisocyanate 1) der Formel (I) einen Isocyanatgehalt von 5 bis 30 % aufweisen, gerechnet als NCO mit dem Molgewicht 42 und bezogen auf das Gesamtgewicht der Isocyanate, sowie eine mittlere NCO-Funktionalität von 1,8 bis 4,2.

3. Wässrige Dispersion einer hitzehärtenden Polyurethankomposition gemäß Anspruch 1, **dadurch gekennzeichnet, dass** die Polyisocyanate 1) der Formel (I) aliphatische, cycloaliphatische, araliphatische oder aromatische Isocyanate sind.

4. Wässrige Dispersion einer hitzehärtenden Polyurethankomposition gemäß Anspruch 1 , **dadurch gekennzeichnet, dass** als Polyisocyanate 1) der Formel (I) solche mit Isocyanurat- und/oder Allophanat- und/oder Biuret- und/oder Oxadiazinstrukturen eingesetzt werden.

5. Wässrige Dispersion einer hitzehärtenden Polyurethankomposition gemäß Anspruch 1 , **dadurch gekennzeichnet, dass** die hydrophilierenden Komponenten 3) Alkoxylate von einwertigen und zweiwertigen Alkoholen sind.

6. Wässrige Dispersion einer hitzehärtenden Polyurethankomposition gemäß Anspruch 1, **dadurch gekennzeichnet, dass** die hydrophilierenden Komponenten 3) Molgewichte größer als 1500 aufweisen und bei der Alkoxylierung mehr als 30 Gew.- Teile Propylenoxid verwendet werden.

7. Wässrige Dispersion einer hitzehärtenden Polyurethankomposition gemäß Anspruch 1, **dadurch gekennzeichnet, dass** als gemischtfunktionelle Verbindungen 4) hydroxylfunktionelle tertiäre Amine verwendet werden.

8. Wässrige Dispersion einer hitzehärtenden Polyurethankomposition gemäß Anspruch 1, **dadurch gekennzeichnet, dass** die gemischtfunktionellen Verbindungen 4) durch die Formeln (DC),(X) und (XI), bzw. deren Natriumsalze beschrieben sind:
H₂N-CH₂-CH₂-NH-CH₂-CH₂-SO₃H (IX)
H₂N-CH₂-CH₂-NH-CH₂-CH₂-COOH (X)
H-O-(CHY-CHY-O)₂-CH₂-CH₂-CH-(SO₃H)-CH₂-O(CHY-CHY-O)₂H (XI)

9. Wässrige Dispersion einer hitzehärtenden Polyurethankomposition gemäß Anspruch 1, **dadurch gekennzeichnet, dass** als Blockiermittel für Isocyanatgruppen 5) folgende Verbindungsklassen verwendet werden: Alkohole, Lactame, Oxime, Phenole, offenkettige sekundäre Amine, Cycloalkanoncarbonsäureester, C-H-acide Diketone bzw. Ketoester und Stickstoffheterocyclen wie Imidazol, Triazol oder 3,5-Dimethylpyrazol.

10. Wässrige Dispersion einer hitzehärtenden Polyurethankomposition gemäß Anspruch 1 , **dadurch gekennzeichnet, dass** als Blockiermittel für Isocyanatgruppen 5) vor allem folgende Verbindungsklassen verwendet werden: Oxime und Pyrazole.

11. Wässrige Dispersion einer hitzehärtenden Polyurethankomposition gemäß Anspruch 1, **dadurch gekennzeichnet, dass** als ggf. anwesende Hilfs- und Zusatzstoffe folgende Zusätze fungieren können: Entlüfter, Antikratermittel, Katalysatoren für die Urethanisierung, Deblockierungskatalysatoren, Emulgatoren, Netzmittel, Entschäumer, Verdicker und Rheologiemodifizierer, Egalisiermittel, Tenside, Distanziermittel, Weichmacher, Antistatika und ggf. Lösungsmittel in kleinen Mengen.

12. Verfahren zur Herstellung einer wässrigen Dispersion einer hitzehärtenden Polyurethankomposition, erhältlich durch :
a) Reaktion von:
1) 35 bis 60 Gewichtsteilen von Polyisocyanaten der Formel (I)
Q(NCO)ₚ (I)
mit p größer als 1,5,
2) 10 bis 25 Gewichtsteilen carbinolfunktioneller Polysiloxane der Formel (II)
H-X-(R)ₓ-[Si(Me₂)-O]ₙ-Si(Me₂)-(R)ₓ-X-H (II)
mit R = (CH₂) mit x = 2 bis 20
X = -O-(CHY-CHY-O)ₒ- mit Y = Methyl- oder Wasserstoff, mit der Einschränkung, dass pro CHY-CHY- Einheit entweder beide Y für H stehen oder nur ein Y von beiden Methyl- bedeuten soll, und o = 0 bis 20 ,
und n = 4 bis 50
sowie Me = Methyl,
3) 7,5 bis 20 Gewichtsteilen hydrophilierender Komponenten der Struktur (III) und/oder (IV)
H-O-(CHY-CHY-O)_{q}-H (III)
R-O-(CHY-CHY-O)ₘ-H (IV)
mit Y in der oben genannten Bedeutung
und q = 20 bis 40
sowie m = 25 bis 65
und R = Alkyl mit einem bis sechs Kohlenstoffatomen,
4) 0,5 bis 2,5 Gewichtsteilen einer gemischtfunktionellen Verbindung, die gleichzeitig mindestens eine tertiäre Amino- oder eine Säuregruppe und mindestens eine Funktion aus der folgenden Gruppe, gebildet aus : primärer Aminofunktion, sekundärer Aminofunktion, Hydroxylfunktion und Thiolfunktion aufweist,
5) 10 bis 30 Gewichtsteile eines Blockiermittels für Isocyanatgruppen, (bezogen stets auf 100 % Feststoffgehalt und ohne ggf. anwesende Hilfs- und Zusatzstoffe),
b1) Ansäuern des Reaktionsgemisches aus 1), 2), 3), 4) und 5) und
b2) Zugabe von Wasser sowie ggf. weiterer Hilfs- und Zusatzstoffe.

13. Verwendung der wässrigen Dispersion einer hitzehärtenden Polyurethankomposition gemäß den Ansprüchen 1 bis 8 zur permanenten Hydrophobierung von textilen Materialien.

14. Verwendung der wässrigen Dispersion einer hitzehärtenden Polyurethankomposition gemäß den Ansprüchen 1 bis 8 als Fixiermittel bei der gleichzeitigen Verwendung von Hilfsmitteln in der Ausrüstung von textilen Materialien, die für sich allein nicht vernetzungsfähig sind.

15. Verwendung der wässrigen Dispersion einer hitzehartenden Polyurethankomposition gemäß den Ansprüchen 1 bis 10 , **dadurch gekennzeichnet, dass** diese sowohl zusammen mit dem in Anspruch 14 genannten, nicht vernetzungsfähigen Hilfsmittel im gleichen Behandlungsbad (einbadig) appliziert werden kann , als auch in separaten Behandlungsstufen mit separaten Behandlungsbädern durchgerührt werden kann, sowohl im Ausziehverfahren als auch in einem Zwangsapplikationverfahren.

## Claims

1. Aqueous dispersion of a thermo-hardening polyurethane composition obtainable by:
a) a reaction of:
1) 35 to 60 % by weight of polyisocyanates according to formula (I)
Q(NCO)ₚ (I),
wherein p is greater than 1,5;
2) 10 to 25 % by weight of carbinol functional polysiloxanes according to formula (II)
H-X-(R)ₓ-[Si(Me₂)-O]ₙ-Si(Me₂)-(R)ₓ-X-H (II),
wherein R = (CH₂) with x = 2 to 20;
X = -O-(CHY-CHY-O)o-, wherein Y = methyl or hydrogen with the limitation that per CHY-CHY-unit either both Y denote H or only one Y of both denotes methyl, and o = 0 to 20; and
n = 4 to 50; and
Me = methyl;
3) 7.5 to 20 % of weight of hydrophilic components of the structure (III) and/or (IV)
H-O-(CHY-CHY-O)_{q}-H (III)
R-O-(CHY-CHY-O)ₘ-H (IV),
wherein Y has the abovementioned meaning; and
q is 20 to 40;
m = 25 to 65; and
R = alkyl comprising one to six carbon atoms;
4) 0.5 to 2.5 % by weight of a mixed functional compound which simultaneously comprises at least one tertiary amino group or an acid group and at least one function of the following group comprising: a primary amino function, a secondary amino function, a hydroxyl function and a thiol function;
5) 10 to 30 % by weight of a retardant for isocyanate groups (always with respect to 100% solid content and without possibly present auxiliary substances and additives);
b1) acidifying the reaction mixture of 1), 2), 3), 4) and 5); and
b2) addition of water and further auxiliary substances and additives, if necessary.

2. Dispersion according to claim 1, **characterized in that** the polyisocyanates 1) of formula (I) have an isocyanate content of 5 to 30%, specified as NCO having a molar weight of 42 and with respect to the total weight of the isocyanates, as well as a mean NCO-functionality of 1.8 to 4.2.

3. Dispersion according to claim 1, **characterized in that** the polyisocyanates 1) of formula (I) are aliphatic, cycloaliphatic, araliphatic or aromatic isocyanates.

4. Dispersion according to claim 1, **characterized in that** as the polyisocyanates 1) of formula (I) those having isocyanurate and/or allophanate and/or biuret and/or oxadiazine structures are used.

5. Dispersion according to claim 1, **characterized in that** the hydrophilic components 3) are alkoxylates of monovalent or divalent alcoholes.

6. Dispersion according to claim 1, **characterized in that** the hydrophilic components 3) have molar weights of more than 1500, and **in that** in the alkoxylation more than 30 % by weight of propylene oxide are used.

7. Dispersion according to claim 1, **characterized in that** as mixed functional compounds 4) hydroxyl functional tertiary amines are used.

8. Dispersion according to claim 1, **characterized in that** the mixed functional compounds 4) are described by the formulae (IX), (X) and (XI) and their sodium salts:
H₂N-CH₂-CH₂-NH-CH₂-CH₂-SO₃H (IX);
H₂N-CH₂-CH₂-N H-CH₂-CH₂-COOH (X);
H-O-(CHY-CHY-O)₂-CH₂-CH₂-CH-(SO₃H)-CH₂-O(CHY-CHY-O)₂H (XI).

9. Dispersion according to claim 1, **characterized in that** as the blocking agent for isocyanate groups 5) the following compound classes are used: alcoholes, lactames, oximes, phenoles, open-chain secondary amines, cycloalkanone carbonic acid esthers, C-H-acidic diketones or ketone esters and nitrogen hetero cycles such as imidazole, triazole or 3,5-dimethylpyrazole.

10. Dispersion according to claim 1, **characterized in that** as the blocking agent for isocyanate groups 5) particularly the following compound classes are used: oximes and pyrazoles.

11. Dispersion according to claim 1, **characterized in that** the following additions can serve as possibly present auxiliary substances and additives: deaerating agents, anti-cratering agents, catalysts for the urethanisation, deblocking catalysts, emulsifiers, wetting agents, defoaming agents, thickening agents and rheology modifiers, equalisation agents, tensides, spacing agents, plasticizers, antistatic agents and solvents in small amounts, if necessary.

12. Method for manufacturing an aqueous dispersion of a thermo-hardening polyurethane composition which is obtainable by:
a) a reaction of:
1) 35 to 60 % by weight of polyisocyanates according to formula (I)
Q(NCO)ₚ (I),
wherein p is greater than 1.5;
2) 10 to 25 % by weight of carbinol functional polysiloxanes according to formula (II)
H-X-(R)ₓ-[Si(Me₂)-O]ₙ-Si(Me₂)-(R)ₓ-X-H (II),
wherein R = (CH₂) with x = 2 to 20;
X = -O-(CHY-CHY-O)o-, wherein Y = methyl or hydrogen with the limitation that per CHY-CHY-unit either both Y denote H or only one Y of both denotes methyl and o = 0 to 20; and
n = 4 to 50; and
Me = methyl;
3) 7.5 to 20 % of weight of hydrophilic components of the structure (III) and/or (IV)
H-O-(CHY-CHY-O)_{q}-H (III)
R-O-(CHY-CHY-O)ₘ-H (IV),
wherein Y has the abovementioned meaning; and
q is 20 to 40;
m = 25 to 65; and
R = alkyl comprising one to six carbon atoms;
4) 0.5 to 2.5 % by weight of a mixed functional compound which simultaneously comprises at least one tertiary amino group or an acid group and at least one function of the following group comprising: a primary amino function, a secondary amino function, a hydroxyl function and a thiol function;
5) 10 to 30 % by weight of a blocking agent for isocyanate groups (always with respect to 100% solid content and without possibly present auxiliary substances and additives);
b1) acidifying the reaction mixture of 1), 2), 3), 4) and 5); and
b2) addition of water and further auxiliary substances and additives, if necessary.

13. Use of the aqueous dispersion of a thermo-hardening polyurethane composition according to any one of claims 1 to 8 for permanently hydrophobizing textile materials.

14. Use of the aqueous dispersion of a thermo-hardening polyurethane composition according to any one of claims 1 to 8 as a fixing agent with simultaneous use of auxiliary substances in the finishing of textile materials which are not capable by themselves to be crosslinked.

15. Use of the aqueous dispersion of a thermo-hardening polyurethane composition according to any one of claims 1 to 10, **characterized in that** it is adapted to be applied together with the auxiliary substances mentioned in claim 14, which are not capable of being crosslinked, in the same bath treatment (single bath), and can be implemented in separate treatment stages with separate bath treatments both by an exhaust process and a forced application process.

## Revendications

1. Dispersion aqueuse d'une composition de polyuréthane thermodurcissable, la dispersion pouvant être obtenue par :
a) réaction de :
1) 35 à 60 parties en poids de polyisocyanates de formule (I)
Q(NCO)ₚ (I)
avec p supérieur à 1,5,
2) 10 à 25 parties en poids de polysiloxane à fonction carbinol de formule (II)
H-X-Rₓ-[Si(Me₂)-O]ₙ-Si(Me)₂-(R)ₓ-X-H (II)
avec R = (CH₂) avec x = 2 à 20
X = -O-(CHY-CHY-O)ₒ- avec Y = méthyle ou hydrogène, avec la limitation que par unité CHY-CHY- les deux Y désignent H ou seulement un Y des deux signifie méthyle, et o = 0 à 20,
et n = 4 à 50
ainsi que Me = méthyle,
3) 7,5 à 20 parties en poids de composants hydrophilisants de structure (III) et/ou (IV)
H-O-(CHY-CHY-O)_{q}-H (III)
R-O-(CHY-CHY-O)ₘ-H (IV)
avec Y comme défini ci-dessus
et q = 20 à 40
ainsi que m = 25 à 65
et R = alkyle avec un à six atomes de carbone
4) 0,5 à 2,5 parties en poids d'un composé à fonction mixte, qui comprend à la fois au moins un groupe tertiaire amine ou acide et au moins une fonction du groupe suivant constitué de : fonction amine primaire, fonction amine secondaire, fonction hydroxyle et fonction thiol,
5) 10 à 30 parties en poids d'un moyen de blocage pour des groupes isocyanate (toujours par rapport à 100% de la teneur en matière solide sans adjuvants et additifs éventuellement présents),
b1) acidification du mélange réactionnel issu de 1), 2), 3), 4) et 5) et
b2) addition d'eau ainsi que, éventuellement, d'autres adjuvants et additifs.

2. Dispersion aqueuse d'une composition de polyuréthane thermodurcissable selon la revendication 1, **caractérisée en ce que** les polyisocyanates 1) de formule (I) présentent une teneur en isocyanate de 5 à 30%, calculée en termes de NCO ayant une masse molaire 42 et par rapport au poids total des isocyanates, ainsi qu'une fonctionnalité NCO moyenne de 1,8 à 4,2.

3. Dispersion aqueuse d'une composition de polyuréthane thermodurcissable selon la revendication 1, **caractérisée en ce que** les polyisocyanates 1) de formule (I) sont des isocyanates aliphatiques, cycloaliphatiques, araliphatiques ou aromatiques.

4. Dispersion aqueuse d'une composition de polyuréthane thermodurcissable selon la revendication 1, **caractérisée en ce que** les polyisocyanates 1) de formule (I) sont utilisés avec des structures isocyanurate et/ou allophanate et/ou biuret et/ou oxadiazine.

5. Dispersion aqueuse d'une composition de polyuréthane thermodurcissable selon la revendication 1, **caractérisée en ce que** les composants hydrophilisants 3) sont des alcoxylates d'alcools primaires et secondaires.

6. Dispersion aqueuse d'une composition de polyuréthane thermodurcissable selon la revendication 1, **caractérisée en ce que** les composants hydrophilisants 3) présentent des poids molaires supérieurs à 1500 et plus de 30 parties en poids d'oxyde de propylène sont utilisées dans l'alcoxylation.

7. Dispersion aqueuse d'une composition de polyuréthane thermodurcissable selon la revendication 1, **caractérisée en ce que** des amines tertiaires à fonction hydroxyle sont utilisées en tant que composés à fonction mixte 4).

8. Dispersion aqueuse d'une composition de polyuréthane thermodurcissable selon la revendication 1, **caractérisée en ce que** les composés à fonction mixte 4) sont décrits par les formules (IX), (X) et (XI), et leurs sels de sodium respectifs :
H₂N-CH₂-CH₂-NH-CH₂-CH₂-SO₃H (IX)
H₂N-CH₂-CH₂-NH-CH₂-CH₂-COOH (X)
H-O-(CHY-CHY-O)₂-CH₂-CH₂-CH-(SO₃H)-CH₂-O(CHY-CHY-O)₂-H (XI)

9. Dispersion aqueuse d'une composition de polyuréthane thermodurcissable selon la revendication 1, **caractérisée en ce que** les classes de composés suivantes sont utilisées en tant que moyen de blocage pour des groupes isocyanate 5) : alcools, lactames, oximes, phénols, amines secondaires à chaîne ouverte, esters d'acide carbonique de cycloalcanones, dicétones ou cétoesters C-H-acides et hétérocycles d'azote comme imidazole, triazole ou 3,5-diméthylpyrazole.

10. Dispersion aqueuse d'une composition de polyuréthane thermodurcissable selon la revendication 1, **caractérisée en ce que** les classes de composés suivantes sont de préférence utilisées en tant que moyen de blocage pour des groupes isocyanate 5) : oximes et pyrazoles.

11. Dispersion aqueuse d'une composition de polyuréthane thermodurcissable selon la revendication 1, **caractérisée en ce que** les additifs suivants peuvent servir en tant qu'adjuvants et additifs éventuellement présents : exhausteurs, agents anti-cratère, catalyseurs pour l'uréthanisation, catalyseurs de déblocage, émulsifiants, agents réticulants, antimoussants, épaississants et modificateurs de rhéologie, agents nivelants, tensides, agents distanciants, adoucissants, antistatiques et éventuellement dissolvants en petites quantités.

12. Procédé de fabrication d'une dispersion aqueuse d'une composition de polyuréthane thermodurcissable, la dispersion pouvant être obtenue par :
a) réaction de :
1) 35 à 60 parties en poids de polyisocyanates de formule (I)
Q(NCO)ₚ (I)
avec p supérieur à 1,5,
2) 10 à 25 parties en poids de polysiloxane à fonction carbinol de formule (II)
H-X-Rₓ-[Si(Me₂)-O]ₙ-Si(Me)₂-(R)ₓ-X-H (II)
avec R = (CH₂) avec x = 2 à 20
X = -O-(CHY-CHY-O)ₒ- avec Y = méthyle ou hydrogène, avec la limitation que par unité CHY-CHY- les deux Y désignent H ou seulement un Y des deux signifie méthyle, et o = 0 à 20,
et n = 4 à 50
ainsi que Me = méthyle,
3) 7,5 à 20 parties en poids de composants hydrophilisants de structure (III) et/ou (IV)
H-O-(CHY-CHY-O)_{q}-H (III)
R-O-(CHY-CHY-O)ₘ-H (IV)
avec Y comme défini ci-dessus
et q = 20 à 40
ainsi que m = 25 à 65
et R = alkyle avec un à six atomes de carbone
4) 0,5 à 2,5 parties en poids d'un composé à fonction mixte, qui comprend à la fois au moins un groupe tertiaire amine ou acide et au moins une fonction du groupe suivant constitué de : fonction amine primaire, fonction amine secondaire, fonction hydroxyle et fonction thiol,
5) 10 à 30 parties en poids d'un moyen de blocage pour des groupes isocyanate (toujours par rapport à 100% de la teneur en matière solide sans adjuvants et additifs éventuellement présents),
b1) acidification du mélange réactionnel issu de 1), 2), 3), 4) et 5) et
b2) addition d'eau ainsi que, éventuellement, d'autres adjuvants et additifs.

13. Utilisation de la dispersion aqueuse d'une composition de polyuréthane thermodurcissable selon les revendications 1 à 8 pour l'hydrophobisation permanente de matériaux textiles.

14. Utilisation de la dispersion aqueuse d'une composition de polyuréthane thermodurcissable selon les revendications 1 à 8 en tant que moyen de fixation dans l'utilisation simultanée d'adjuvants dans le traitement de matériaux textiles, qui ne sont pas réticulables en tant que tels.

15. Utilisation de la dispersion aqueuse d'une composition de polyuréthane thermodurcissable selon les revendications 1 à 10, **caractérisée en ce que** l'utilisation peut être à la fois appliquée avec l'adjuvant non-réticulable mentionné dans la revendication 14 dans le même bain de traitement (un bain), et également réalisée dans des étapes de traitement séparées avec des bains séparés, à la fois dans un procédé d'épuisement de bain et également dans un procédé de foulardage.
